# EUROPÄISCHE PATENTSCHRIFT

(11) **EP 3 118 044 B1**
(45) Veröffentlichungstag und Bekanntmachung des Hinweises auf die Patenterteilung: **07.08.2019**
(21) Anmeldenummer: 16001402.3
(22) Anmeldetag: 22.06.2016
(51) Int. Cl.: B60K 16/00

(54) **WINDENERGIEGEWINNUNG WÄHREND EINES FAHRZEUG-BREMSVORGANGS**
WIND ENERGY EXTRACTION DURING A VEHICLE BRAKING PROCEDURE
EXTRACTION D'ÉNERGIE ÉOLIENNE PENDANT UN PROCÉDÉ DE FREINAGE DE VÉHICULE

(30) Priorität: 04.07.2015 DE 102015008670
(43) Veröffentlichungstag der Anmeldung: 18.01.2017
(73) Patentinhaber: MAN Truck & Bus SE, 80995 München (DE)
(72) Erfinder: Schlosser, Rupert, 80935 München (DE)
(74) Vertreter: v. Bezold & Partner Patentanwälte - PartG mbB

(56) Entgegenhaltungen:
- EP-A1- 2 138 364
- WO-A1-2014/124468
- CH-A2- 702 904
- DE-A1-102011 006 729
- DE-U1-202015 001 640
- US-A1- 2013 043 082
- US-A1- 2013 146 372

## Beschreibung

Die Erfindung betrifft ein Betriebsverfahren für ein Fahrzeug, mit zumindest einer Einrichtung zur Windenergiegewinnung, insbesondere zumindest einem Windrad und/oder zumindest einer Windturbine. Die Erfindung betrifft ebenfalls ein zugehöriges Fahrzeug.

Im Stand der Technik sind Fahrzeuge mit Einrichtungen zur Windenergiegewinnung bereits bekannt. So offenbart die DE 10 2013 011 116 A1 z. B. ein Fahrzeug mit einem Fahrzeugaufbau und einem Windrad, wobei das Windrad einen mit einem Bordnetz des Fahrzeugs elektrisch gekoppelten Generator nach Art einer rotierenden elektrischen Maschine rotierend antreibt. Das Windrad ist zwischen einer Betriebsstellung und einer Bereitschaftsstellung am Fahrzeug verfahrbar angeordnet, wobei die Betriebsstellung des Windrads für einen Ruhebetrieb des Fahrzeugs vorgesehen ist und ein Fahrbetrieb des Fahrzeugs in der Bereitschaftsstellung des Windrads ermöglicht ist.

Ein Betriebsverfahren nach dem Oberbegriff des Anspruchs 1 ist aus der WO 2014/124468 A1 und aus der US 2013/043082 A1 bekannt.

Weitere Betriebsverfahren sind in der EP 2 138 364 A1, der DE 10 2011 006 729 A1 und der DE 20 2015 001 640 U1 beschrieben.

Eine Aufgabe der Erfindung ist es, eine Möglichkeit zu schaffen, mittels der bei einem Fahrzeug Windenergie ergänzend und/oder alternativ gewonnen werden kann.

Diese Aufgabe kann mit einem Betriebsverfahren mit den Merkmalen des unabhängigen Anspruchs 1 und mit einem zugehörigen Fahrzeug mit den Merkmalen des unabhängigen Anspruchs 23 gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Betriebsverfahren für ein Fahrzeug, vorzugsweise ein Kraftfahrzeug, insbesondere ein Nutzfahrzeug, z. B. ein Lastkraftwagen oder einen Omnibus. Das Fahrzeug kann alternativ oder ergänzend ein Schienenfahrzeug, ein Schiff, ein Fahrzeug-Anhänger, ein Fahrzeug-Auflieger, ein Wagon und dergleichen sein.

Das Fahrzeug weist zumindest eine Einrichtung zur Windenergiegewinnung, vorzugsweise zumindest ein Windrad und/oder zumindest eine Windturbine, auf.

Das Betriebsverfahren zeichnet sich insbesondere dadurch aus, dass die Windenergiegewinnung mittels Fahrtwind und somit zweckmäßig in einem Fahrbetrieb des Fahrzeugs während eines Bremsvorgangs des sich fortbewegenden Fahrzeugs erfolgt. Die Windenergiegewinnung erfolgt somit zweckmäßig durch insbesondere direkte und/oder indirekte Fahrtwindbeaufschlagung der Einrichtung während eines Bremsvorgangs des sich fortbewegenden Fahrzeugs.

Es ist möglich, dass im Fahrbetrieb des Fahrzeugs ohne Bremsvorgang die Windenergiegewinnung unterbunden wird und somit vorzugsweise keine Windenergiegewinnung im Fahrbetrieb des Fahrzeugs ohne Bremsvorgang erfolgt. Im Rahmen der Erfindung ist es somit insbesondere möglich, dass die Windenergiegewinnung mittels Fahrtwind zweckmäßig ausschließlich während eines Bremsvorgangs des Fahrzeugs erfolgt.

Die Windenergiegewinnung mittels Fahrtwind erfolgt vorzugsweise während eines Bergabfahrt-Bremsvorgangs des Fahrzeugs und/oder während eines Dauerbremsvorgangs des Fahrzeugs. Da die Windenergiegewinnung zweckmäßig den Luftwiderstand des Fahrzeugs erhöht, kann dadurch die Bremswirkung des Fahrzeugs erhöht und/oder unterstützt werden, insbesondere zusätzlich zur Bremskraft der Fahrzeugbremsanlage.

Bei vielen Fahrzeugen wird eine Dauerbremskraftübertragung nur über eine Achse übertragen, so dass hierfür Grenzen gesetzt sind. Die Kraftübertragung wird insbesondere von der beladungsabhängigen Achslast, von der Witterung, von der Fahrbahnbeschaffenheit, von der Topografie, von der Straßenführung und/oder den Reifen des Fahrzeugs beeinflusst.

Ein weiterer Vorteil ist, dass sich im Dauerbremsbetrieb bei Bergabfahrt eine Fahrzeugkühlung nicht oder nur vermindert aufheizt und bei einer anschließenden Weiterfahrt und/oder anschließenden Bergauffahrt des Fahrzeugs Kühlwasser auf normaler oder nur geringfügig erhöhter Betriebstemperatur ist und nicht oder nur vermindert heruntergekühlt werden muss. Des Weiteren ist es möglich, bei Bergabfahrt die Kühlwassertemperatur unter die Betriebstemperatur herunter zu kühlen, um bei einer anschließenden Bergauffahrt mehr Kühlreserven zu haben, so dass dementsprechend z. B. die Einschaltzeit eines Lüfters vermieden oder minimiert werden kann. Bei z. B. einem motorseitig angetriebenen Lüfter käme es somit zu keinem Leistungsverlust (ein voll zugeschalteter Lüfter kann z. B. je nach Ausführung bis zu 50 kW benötigen), was dementsprechend mit einer zusätzlichen Kraftstoffeinsparung einhergeht.

Das Fahrzeug weist erfindungsgemäß ein oder mehrere öffenbare und schließbare Luftleitelemente für die Einrichtung auf.

Das Luftleitelement dient vorzugsweise dazu, im Öffnungszustand, zweckmäßig während eines Bremsvorgangs des Fahrzeugs, Fahrtwind zur Einrichtung zu leiten, und/oder im Schließzustand, zweckmäßig im Fahrbetrieb des Fahrzeugs ohne Bremsvorgang, die Einrichtung insbesondere aerodynamisch von Fahrtwind abzuschirmen. Das Luftleitelement kann hierzu vorzugsweise verstellbar ausgeführt sein, z. B. verfahrbar und/oder verschwenkbar, insbesondere ein- und ausfahrbar und/oder ein- und ausschwenkbar. Dadurch kann das Luftleitelement in einen Schließ- und zumindest einen Öffnungszustand gebracht werden.

Das Luftleitelement nimmt insbesondere während eines Bremsvorgangs des Fahrzeugs den Öffnungszustand an und im Fahrbetrieb des Fahrzeugs ohne Bremsvorgang den Schließzustand.

Das Luftleitelement dient somit zweckmäßig im Fahrbetrieb des Fahrzeugs ohne Bremsvorgang zur Abschirmung der Einrichtung von Fahrtwind, so dass die Einrichtung zweckmäßig den Luftwiderstand des Fahrzeugs nicht erhöht.

Das Luftleitelement kann allerdings während eines Bremsvorgangs des Fahrzeugs zur zweckmäßig direkten und/oder indirekten Fahrtwindanströmung der Einrichtung und somit zur Windenergiegewinnung die Einrichtung zumindest abschnittsweise freilegen.

Das Luftleitelement leitet vorzugsweise während eines Bremsvorgangs des Fahrzeugs Fahrtwind hin zur Einrichtung. Alternativ oder ergänzend ist das Luftleitelement ausgeformt, um im Öffnungszustand Fahrtwind einzufangen und somit vorzugsweise eine Art Fahrtwind-Fangmaul auszubilden, z. B. um Fahrtwind außerhalb der Fahrzeugkontur einzufangen. Das Fangmaul kann ähnlich einem im Wesentlichen horizontalen Fallschirm wirken.

Es ist möglich, dass das Luftleitelement während eines Bremsvorgangs die Fahrtwindanströmfläche des Fahrzeugs gegenüber einem Fahrbetrieb des Fahrzeugs ohne Bremsvorgang vergrößert, so dass insbesondere eine Unterstützung des Bremsvorgangs und/oder eine Vergrößerung der Fahrtwindanströmung der Einrichtung erzielt werden kann.

Das Luftleitelement kann also im Rahmen der Erfindung nicht nur eine bloße Luftdurchlassöffnung bilden, wie z. B. bei Rollos, Jalousien und Klappen im Fronbereich von Kraftfahrzeugen üblich, sondern kann Fahrtwind für die Einrichtung z. B. außerhalb der eigentlichen Fahrzeugkontur einfangen.

Das Luftleitelement kann z. B. entgegen der Fahrtwindrichtung über der Einrichtung nach vorne hinausragen.

Das Luftleitelement kann z. B. ein Spoilerelement und/oder ein Dachelement umfassen, z. B. eine Dachklappe, insbesondere Hochdachklappe. Das Luftleitelement ist somit vorzugsweise auf dem Fahrzeugdach angeordnet oder darin integriert.

Das Luftleitelement kann ferner z. B. eine Seitenklappe sein.

Das Luftleitelement kann ebenfalls zumindest eine verstellbare Klappe, zumindest einen verstellbaren Rollo und/oder zumindest eine verstellbare Jalousie umfassen, z. B. an oder in der Fahrzeugfront.

Das Luftleitelement umfasst vorzugsweise mehrere Öffnungszustände zur Beeinflussung der Fahrtwindanströmung der Einrichtung. Hierzu kann das Luftleitelement zweckmäßig stufenlos oder stufenweise verstellbar sein.

Es ist möglich, dass die Einrichtung verstellbar ist, insbesondere verfahrbar, z. B. ein- und ausfahrbar, und/oder verschwenkbar, z. B. ein- und ausschwenkbar. Dadurch kann die Einrichtung für den Bremsvorgang des Fahrzeugs in eine Betriebsposition zur Windenergiegewinnung und/oder für den Fahrbetrieb des Fahrzeugs ohne Bremsvorgang in eine Ruheposition ohne Windenergiegewinnung gebracht werden.

Die Einrichtung kann allerdings auch starr und somit zweckmäßig nicht positionsverstellbar am Fahrzeug angeordnet sein.

Es ist möglich, dass gewonnene Windenergie in elektrische Energie, hydraulische Energie, Druckluft-Energie und/oder Gyro-Energie (z. B. Schwungmassenspeicher) umgewandelt und/oder dementsprechend gespeichert wird.

Es ist möglich, dass gewonnene Windenergie zur Kühlung einer Fahrzeugkühlung und/oder zur Klimatisierung eines Fahrzeuginnenraums genutzt wird.

Gewonnene Windenergie kann unterstützend eingesetzt werden und/oder als alleiniger Energieerzeuger.

Insbesondere kann die Einrichtung zur Windenergiegewinnung als alleiniger Energieerzeuger für eine Klimaanlage des Fahrzeugs verwendet werden. Wenn z. B. die Windenergiegewinnung aus dem Brems- und/oder Dauerbremsvorgang nicht ausreichen würde, so könnte ebenfalls im Fahrbetrieb ohne Bremsvorgang die Windenergiegewinnung ausgeführt werden.

Die Einrichtung und/oder das Luftleitelement sind erfindungsgemäß auf dem Fahrzeugdach angeordnet oder im Fahrzeugdach integriert.

Es ist möglich, dass das Luftleitelement abschnittsweise einen Teil des Fahrzeugdachs und abschnittsweise einen Teil der Fahrzeugfront bildet. Es kann sich z. B. von einem Fahrzeugdachbereich bis in einen Fahrzeugfrontbereich erstrecken.

Die Einrichtung ist vorzugsweise so angeordnet, dass sie von Fahrtwind direkt anströmbar ist und zusätzlich Fahrtwind auf den Frontbereich des Fahrzeugs mittels des Frontbereichs zur Einrichtung geleitet wird.

Der Fahrzeugfrontbereich umfasst insbesondere eine Front-Windschutzscheibe des Fahrzeugs. Zumindest ein Luftleitelement kann über der Front-Windschutzscheibe angeordnet sein. Alternativ oder ergänzend kann zumindest ein Luftleitelement unter der Front-Windschutzscheibe angeordnet sein.

Es ist möglich, dass ein Luftleitschacht auf dem Fahrzeugdach angeordnet oder darin integriert ist, z. B. um Fahrtwind zur Einrichtung zu leiten und/oder um Fahrtwind aus der Einrichtung abzuleiten. Der Luftleitschacht kann zumindest abschnittsweise durch das Luftleitelement begrenzt werden.

Der Querschnitt des Luftleitschachts kann sich, vorzugsweise im Öffnungszustand des Luftleitelements, zur Einrichtung hin verjüngen, was zweckmäßig zu einer Erhöhung der Luftgeschwindigkeit führt. Der Querschnitt kann sich z. B. in Höhen- und/oder Querrichtung des Fahrzeugs verjüngen.

Ferner kann ein Fahrzeugbauteil mit zumindest einer Luftdurchlassöffnung in Fahrtwindrichtung hinter der Einrichtung angeordnet sein, um die Einrichtung auf der Fahrzeugrückseite zumindest abschnittsweise abzudecken, zugleich aber Fahrtwind aus der Einrichtung hindurchzulassen.

Der Luftleitschacht und/oder das Fahrzeugbauteil sind ebenfalls vorzugsweise auf dem Fahrzeugdach angeordnet oder darin integriert.

Das Fahrzeug kann mehrere Einrichtungen zur Windenergiegewinnung aufweisen. Den einzelnen Einrichtungen können verschiedene Fahrzeug-Verbraucher und/oder verschiedene Umwandlungsenergien zugeordnet werden. Ebenfalls können den einzelnen Einrichtungen unabhängig voneinander betreibbare Luftleitelemente zugeordnet werden.

Der Bremsvorgang kann durch eine Fahrzeugbremsanlage ausgeführt werden, so dass die Fahrzeugbremsanlage durch die Bremswirkung unterstützt werden kann, die durch die Einrichtung zur Windenergiegewinnung und/oder das Luftleitelement erzeugt wird.

Die Fahrzeugbremsanlage umfasst insbesondere die Betriebsbremse, Motorbremse und/oder Zusatzbremse, z. B. Retarderbremse, des Fahrzeugs.

Die Fahrzeugbremsanlage kann z. B. Reibungs-basiert, Flüssigkeits-basiert und/oder pneumatisch-basiert, etc. ausgeführt sein. Sie kann z. B. eine Rekuperationsbremse umfassen. Der Bremsvorgang kann zweckmäßig dazu führen, dass das Fahrzeug mit im Wesentlichen konstanter Geschwindigkeit eine Bergabfahrt durchführt.

Der Bremsvorgang kann durch eine Fahrzeugbremsanlage ausgeführt werden, so dass die Fahrzeugbremsanlage durch die Bremswirkung unterstützt werden kann, die durch die Einrichtung zur Windenergiegewinnung und/oder das Luftleitelement erzeugt wird. Alternativ oder ergänzend kann der Bremsvorgang durch die Bremswirkung ausgeführt werden, die durch die Einrichtung zur Windenergiegewinnung und/oder das Luftleitelement erzeugt wird. Der Bremsvorgang kann zweckmäßig zu einer Geschwindigkeitsreduzierung des Fahrzeugs führen, so dass sich das Fahrzeug vorzugsweise verlangsamt.

Der Bremsvorgang kann zweckmäßig dazu führen, dass das Fahrzeug mit im Wesentlichen konstanter Geschwindigkeit eine Bergabfahrt durchführt, so dass der Bremsvorgang vorzugsweise zu keiner Geschwindigkeitsreduzierung führt, sondern das Fahrzeug auf im Wesentlichen konstanter Geschwindigkeit hält.

Erfindungsgemäß ist vorgesehen, dass zunächst das Luftleitelement in den Öffnungszustand gebracht wird und die Windenergiegewinnung mittels Fahrtwind erfolgt, was zu einem Bremsvorgang des Fahrzeugs führt, und die Fahrzeugbremsanlage erst bei höherer Bremsanforderung des Fahrzeugs aktiviert, insbesondere dazu geschaltet, wird, um eine zusätzliche Bremswirkung zu erreichen.

Erfindungsgemäß wird die Fahrzeugbremsanlage durch eine zweckmäßig elektronische Fahrzeugsteuereinrichtung in Abhängigkeit einer vordefinierten Geschwindigkeit des Fahrzeugs und/oder in Abhängigkeit eines Abstands zu einem vorausfahrenden Fahrzeug aktiviert, insbesondere dazu geschaltet. Ergänzend kann die Fahrzeugbremsanlage durch eine Bremspedalbetätigung des Fahrzeugführers und/oder durch eine zweckmäßig elektronische Fahrzeugsteuereinrichtung in Abhängigkeit einer erfassten Notbremssituation aktiviert, insbesondere dazu geschaltet werden.

Zu erwähnen ist, dass die Einrichtung zur Windenergiegewinnung direkt an das von der Einrichtung mit Energie versorgte Aggregat verbaut sein kann oder eine Kraftübertragung über einen Keilriemen, eine Welle, z. B. eine Gelenkwelle, und/oder eine Zahnradkonstruktion erfolgen kann.

Die Erfindung ist nicht auf ein Betriebsverfahren beschränkt, sondern umfasst ebenfalls ein Fahrzeug, das zumindest eine Einrichtung zur Windenergiegewinnung, insbesondere zumindest ein Windrad und/oder zumindest eine Windturbine, aufweist. Das Fahrzeug ist eingerichtet, um das Betriebsverfahren wie hierin offenbart auszuführen.

So kann das Fahrzeug z. B. eine Bremsvorgang-Erfassungs-Vorrichtung umfassen, zur Erfassung eines (z. B. stattfindenden oder kurz bevorstehenden bzw. prognostizierten), vorzugsweise durch die Fahrzeugbremsanlage ausgeführten Bremsvorgangs.

Die Einrichtung ist insbesondere ausgeführt, um in Abhängigkeit eines von der Bremsvorgang-Erfassungs-Vorrichtung erfassten Bremsvorgangs betrieben zu werden, so dass die Windenergiegewinnung mittels Fahrtwind während eines durch die Bremsvorgang-Erfassungs-Vorrichtung erfassten Bremsvorgangs durchführbar ist.

Weitere Vorrichtungsmerkmale zum erfindungsgemäßen Fahrzeug ergeben sich aus der Offenbarung zum Betriebsverfahren, auf die verwiesen wird, um Wiederholungen zu vermeiden.

Die hierin zum Betriebsverfahren gemachte Offenbarung gilt sinngemäß auch für das Fahrzeug zum Ausführen des Betriebsverfahrens und ist insoweit ebenfalls zweckmäßig beanspruchbar.

Das Fahrzeug ist vorzugsweise ein Kraftfahrzeug, insbesondere ein Nutzfahrzeug, z. B. ein Lastkraftwagen oder ein Omnibus. Es kann auch ein Fahrzeug-Anhänger, Fahrzeug-Auflieger, Schienenfahrzeug, Wagon und/oder dergleichen sein.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Seitenansicht eines Fahrzeugs zur Durchführung eines Betriebsverfahrens, das nicht zur Erfindung gehört,
- Figur 2: zeigt eine Vorderansicht des Fahrzeugs der Figur 1,
- Figur 3: zeigt eine Vorderansicht des Fahrzeugs der Figuren 1 und 2 mit zu Darstellungszwecken freigelegter Einrichtung zur Windenergiegewinnung,
- Figur 4: zeigt eine Vorderansicht eines Fahrzeugs zur Durchführung eines Betriebsverfahrens gemäß einer Ausführungsform der Erfindung mit geschlossenem Luftleitelement,
- Figur 5: zeigt eine Seitenansicht des Fahrzeugs der Figur 4 mit geöffnetem Luftleitelement,
- Figur 6: zeigt eine Vorderansicht des Fahrzeugs der Figuren 4 und 5, ebenfalls mit geöffnetem Luftleitelement,
- Figur 7: zeigt eine Seitenansicht eines Fahrzeugs zur Durchführung eines Betriebsverfahrens gemäß einer anderen Ausführungsform der Erfindung mit geschlossenem Luftleitelement,
- Figur 8: zeigt eine Vorderansicht des Fahrzeugs der Figur 7 mit geschlossenem Luftleitelement,
- Figur 9: zeigt eine Seitenansicht des Fahrzeugs der Figuren 7 und 8 mit geöffnetem Luftleitelement,
- Figur 10: zeigt eine Vorderansicht des Fahrzeugs der Figuren 7 bis 9 mit geöffnetem Luftleitelement,
- Figur 11: zeigt eine Seitenansicht eines Fahrzeugs zur Durchführung eines Betriebsverfahrens gemäß einer wiederum anderen Ausführungsform der Erfindung mit geschlossenem Luftleitelement;
- Figur 12: zeigt eine Vorderansicht des Fahrzeugs der Figur 11 mit geschlossenem Luftleitelement,
- Figur 13: zeigt eine Seitenansicht des Fahrzeugs der Figuren 11 und 12 mit geöffnetem Luftleitelement,
- Figur 14: zeigt eine Vorderansicht des Fahrzeugs der Figuren 11 bis 13 mit geöffnetem Luftleitelement,
- Figur 15: zeigt eine Vorderansicht eines Fahrzeugs zur Durchführung eines Betriebsverfahrens gemäß einer wiederum anderen Ausführungsform der Erfindung mit geschlossenem Luftleitelement,
- Figur 16: zeigt eine Seitenansicht des Fahrzeugs der Figur 15 mit geschlossenem Luftleitelement,
- Figur 17: zeigt eine Vorderansicht des Fahrzeugs der Figuren 15 und 16 mit geöffnetem Luftleitelement,
- Figur 18: zeigt eine Seitenansicht des Fahrzeugs der Figuren 15 bis 17 mit geöffnetem Luftleitelement,
- Figur 19: zeigt eine Seitenansicht eines Fahrzeugs zur Durchführung eines Betriebsverfahrens gemäß einer wiederum anderen Ausführungsform der Erfindung mit einer Einrichtung in Betriebsposition zur Windenergiegewinnung,
- Figur 20: zeigt eine Vorderansicht des Fahrzeugs der Figur 19 mit der Einrichtung in Betriebsposition zur Windenergiegewinnung,
- Figur 21: zeigt eine Seitenansicht des Fahrzeugs der Figuren 19 und 20 mit der Einrichtung in Ruheposition, und
- Figur 22: zeigt eine Vorderansicht des Fahrzeugs der Figuren 19 bis 21 mit der Einrichtung in Ruheposition.

Die unter Bezugnahme auf die Figuren beschriebenen Ausführungsformen stimmen teilweise überein, so dass ähnliche oder identische Teile mit den gleichen Bezugszeichen versehen sind und zu deren Erläuterung auch auf die Beschreibung der anderen Figuren bzw. Ausführungsformen verwiesen wird, um Wiederholungen zu vermeiden.

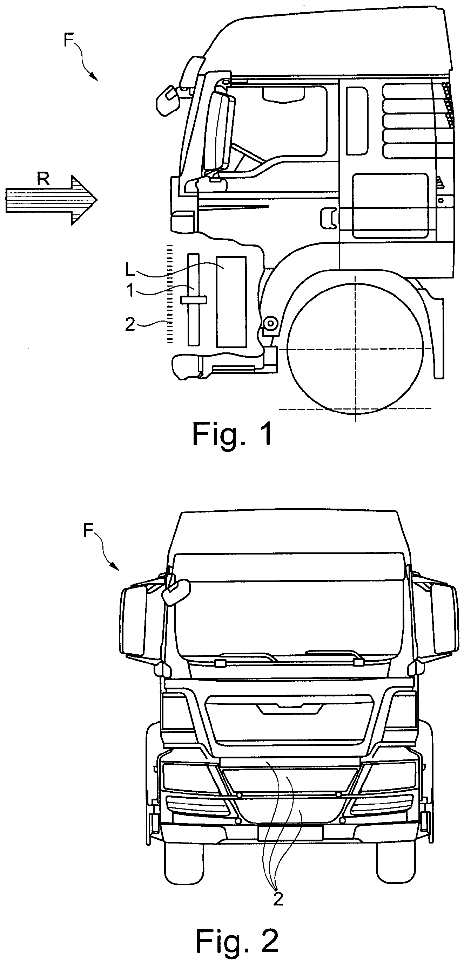

Figur 1 zeigt eine Seitenansicht eines Fahrzeugs F zur Durchführung eines Betriebsverfahrens gemäß einem nicht zur Erfindung gehörenden Beispiel mit einer Weglassung zu Illustrationszwecken, so dass eine Einrichtung 1 zur Windenergiegewinnung, insbesondere ein Windrad und/oder eine Windturbine, und ein in Fahrtwindrichtung R dahinter angeordneter Fahrzeugkühler L gesehen werden kann. Die Einrichtung 1 zur Windenergiegewinnung ist somit zweckmäßig ein Windrad in Form eines Lüfterrads. Die Einrichtung 1 kann somit eine Doppelfunktion übernehmen. Bezugszeichen R kennzeichnet zugleich Fahrtwind auf das Fahrzeug F, insbesondere auf die Fahrzeugfront.

Figur 1 zeigt außerdem ein schematisch dargestelltes, in die Fahrzeugfront integriertes Luftleitelement 2. Das Luftleitelement 2 kann in der in Figur 1 gezeigten Ausführungsform ein Rollo oder eine Jalousie mit z. B. mehreren Klappen umfassen.

Die Einrichtung 1 ist so ausgeführt, dass die Windenergiegewinnung mittels Fahrtwind während eines durch die eigentliche Fahrzeugbremsanlage ausgeführten Bremsvorgangs des sich fortbewegenden Fahrzeugs F erfolgt, insbesondere bei einer Bergabfahrt im Brems-, insbesondere Dauerbremsbetrieb des Fahrzeugs F.

Dazu kann das Fahrzeug F z. B. eine Bremsvorgang-Erfassungs-Vorrichtung zur Erfassung eines stattfindenden und/oder prognostizierten, z. B. kurz bevorstehenden Bremsvorgangs des Fahrzeugs F aufweisen. Der Bremsvorgang wird zweckmäßig durch eine übliche, z. B. pneumatische, insbesondere Druckluft-basierte Bremsanlage des Fahrzeugs F ausgeführt. Die Einrichtung 1 ist zweckmäßig ausgeführt, um in Abhängigkeit eines von der Bremsvorgang-Erfassungs-Vorrichtung erfassten Bremsvorgangs betrieben zu werden, so dass die Windenergiegewinnung mittels Fahrtwind während eines durch die Bremsvorgang-Erfassungs-Vorrichtung erfassten Bremsvorgangs durchgeführt wird.

Das Luftleitelement 2 kann hierzu ebenfalls zweckmäßig ausgeführt sein, um in Abhängigkeit eines von der Bremsvorgang-Erfassungs-Vorrichtung erfassten Bremsvorgangs betrieben zu werden, so dass es während eines durch die Bremsvorgang-Erfassungs-Vorrichtung erfassten Bremsvorgangs einen Öffnungszustand zur Fahrwindanströmung und somit zur Windenergiegewinnung der Einrichtung 1 annimmt. Im Fahrbetrieb des Fahrzeugs F ohne Bremsvorgang hingegen nimmt es einen Schließzustand an, zur zweckmäßig aerodynamischen Abschirmung der Einrichtung 1 vor Fahrtwind.

Figur 2 zeigt eine Vorderansicht des Fahrzeugs F der Figur 1. In Figur 2 ist das Luftleitelement 2 geschlossen. Das Luftleitelement 2 umfasst mehrere, vorzugsweise voneinander separierte Teilabschnitte.

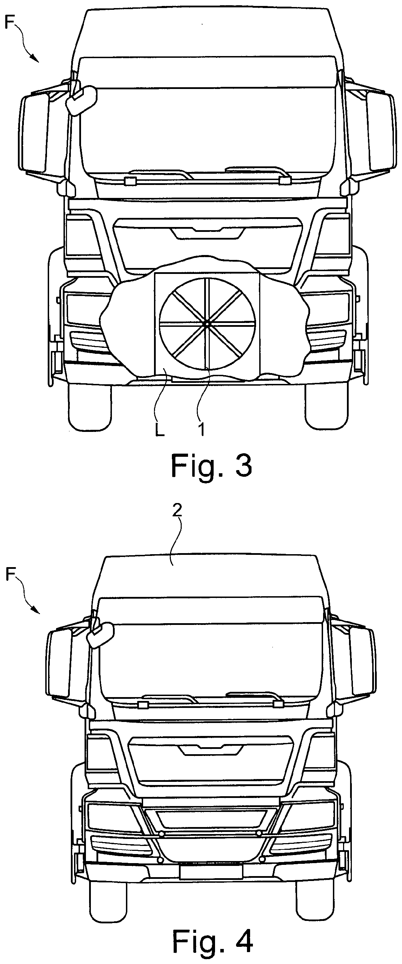

Figur 3 zeigt eine Vorderansicht des Fahrzeugs F der Figuren 1 und 2 mit einer Weglassung zu Illustrationszwecken. Zu sehen ist nochmals die Einrichtung 1 zur Windenergiegewinnung (Windrad, insbesondere Lüfterrad) und der in Fahrtwindrichtung R dahinter angeordnete Fahrzeugkühler L.

Figur 4 zeigt eine Vorderansicht eines Fahrzeugs F zur Durchführung eines Betriebsverfahrens gemäß einer Ausführungsform der Erfindung mit geschlossenem Luftleitelement 2 zur Abschirmung der Einrichtung 1.

Das Fahrzeug F umfasst ein Fahrerhaus, insbesondere ein Fernfahrerhaus. Das Luftleitelement 2 ist als Dachklappe auf dem Fahrzeugdach ausgeführt.

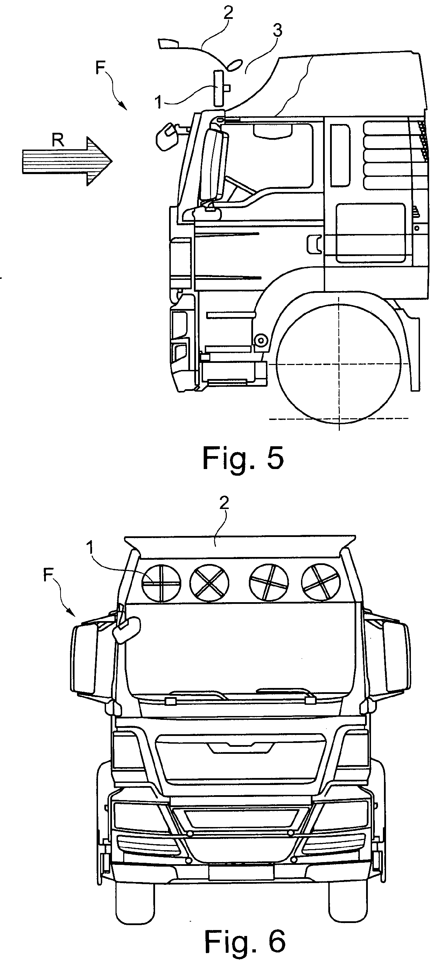

Figur 5 zeigt eine Seitenansicht des Fahrzeugs F der Figur 4 mit geöffnetem Luftleitelement 2, so dass die auf oder im Fahrzeugdach angeordnete Einrichtung 1 zur Fahrtwindanströmung freigelegt ist.

Das Luftleitelement 2 ist so ausgeformt und verstellbar, insbesondere verschwenkbar, dass es während eines Bremsvorgangs des Fahrzeugs F Fahrtwind einfängt und somit zweckmäßig ein Fahrtwind-Fangmaul ausbildet, und zugleich den Fahrtwind hin zur Einrichtung 1 lenkt. Es wird ersichtlich, dass das Luftleitelement 2 während eines Bremsvorgangs des Fahrzeugs F und somit im Öffnungszustand die Fahrtwindanströmfläche des Fahrzeugs F gegenüber einem Fahrbetrieb des Fahrzeugs F ohne Bremsvorgang und somit im Schließzustand erhöht, wodurch der Bremsvorgang des Fahrzeugs F unterstützt wird. Das Luftleitelement 2 kann Fahrtwind von außerhalb der Fahrzeugkontur einfangen.

In Figur 5 ist ferner ein Luftleitschacht 3 ausgebildet, so dass Fahrtwind aus der Einrichtung 1 abgeführt werden kann.

Figur 6 zeigt eine Vorderansicht des Fahrzeugs F der Figuren 4 und 5 mit geöffnetem Luftleitelement 2, so dass die Einrichtung 1 zur Windenergiegewinnung freigelegt wird.

Bei der in Figur 6 gezeigten Ausführungsform sind beispielhaft vier Einrichtungen 1 zur Windenergiegewinnung und ein Luftleitelement 2 vorhanden. Im Rahmen der Erfindung können allerdings mehrere zweckmäßig verstellbare Luftleitelemente 2, insbesondere Dachklappen, verwendet werden, insbesondere dann, wenn die Einrichtungen 1 verschiedene Verbraucher versorgen sollen und/oder verschiedene Energien erzeugen sollen.

Den Figuren 5 und 6 kann ferner entnommen werden, dass die Einrichtung 1 so auf dem Fahrzeugdach angeordnet ist, insbesondere darin integriert ist, dass sie nicht nur direkt von Fahrtwind anströmbar ist, sondern zusätzlich auf den Frontbereich, insbesondere die Front-Windschutzscheibe, des Fahrzeugs F treffender Fahrtwind mittels des Frontbereichs und des Luftleitelements 2 zur Einrichtung 1 geleitet wird, was die Effektivität der Einrichtung 1 erhöht.

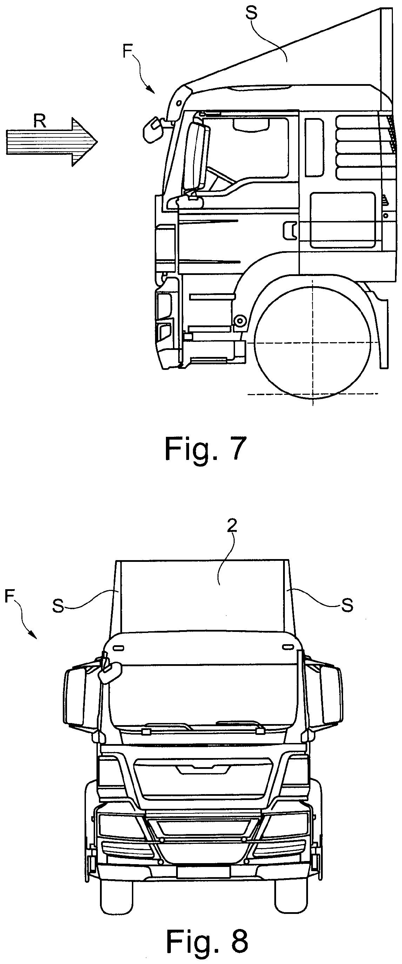

Figur 7 zeigt eine Seitenansicht eines Fahrzeugs F zur Durchführung eines Betriebsverfahrens gemäß einer anderen Ausführungsform der Erfindung. Bezugszeichen S kennzeichnet Seitenelemente eines Dachspoilers.

Figur 8 zeigt eine Vorderansicht des Fahrzeugs F der Figur 7 mit geschlossenem Luftleitelement 2. Das Luftleitelement 2 ist als vorzugsweise zwischen den Seitenelementen S ausgebildete auf- und zuschwenkbare Spoilerklappe 2 ausgeführt.

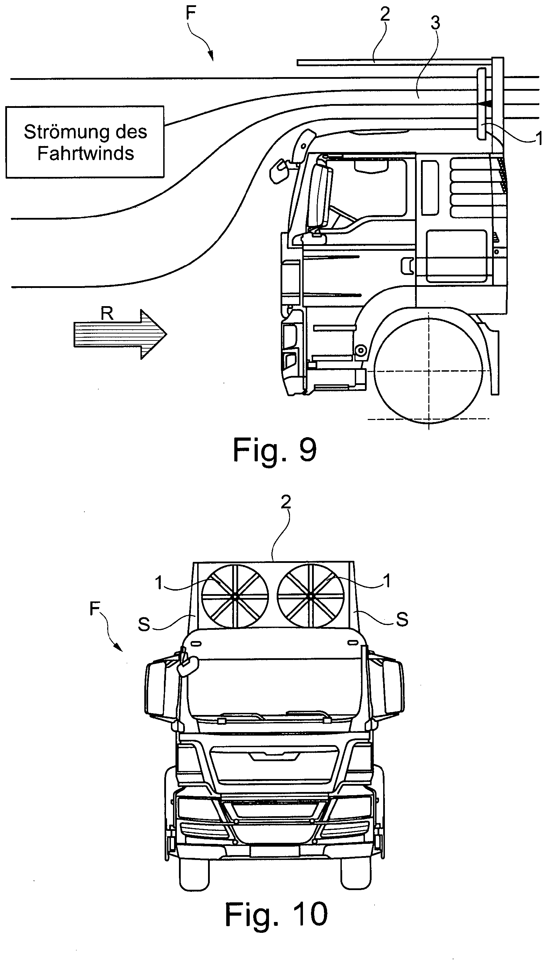

Figur 9 zeigt eine Seitenansicht des Fahrzeugs F der Figuren 7 und 8 mit geöffnetem Luftleitelement 2, so dass Fahrtwind zur Windenergiegewinnung der Einrichtung 1 zugeführt werden kann. Das Luftleitelement 2 erstreckt sich über der Einrichtung 1 entgegen der Fahrtwindrichtung R nach vorne.

Figur 9 zeigt ferner die Besonderheit, dass das Luftleitelement 2 nicht nur zur Bildung einer bloßen Fahrtwind-Durchlassöffnung ausgeführt ist, sondern im geöffneten Zustand Fahrtwind einfängt und somit als Fahrtwind-Fangmaul fungiert.

Figur 9 zeigt zudem, dass die Einrichtung 1 nicht nur direkt von Fahrtwind anströmbar ist, sondern ebenfalls auf die Fahrzeugfront auftreffender Fahrtwind zur Einrichtung 1 geleitet wird und/oder von dem Luftleitelement 2 eingefangen und zur Einrichtung 1 geleitet wird. Das Luftleitelement 2 bildet hierzu einen Luftleitschacht 3 auf oder in dem Fahrzeugdach aus.

In Fahrtwindrichtung R hinter der Einrichtung 1 ist ein Fahrzeugbauteil mit zumindest einer Luftdurchlassöffnung angeordnet ist, um die Einrichtung 1 auf der Fahrzeugrückseite zumindest abschnittsweise abzudecken, zugleich aber Fahrtwind aus der Einrichtung 1 hindurchzulassen.

Figur 10 zeigt eine Vorderansicht des Fahrzeugs F der Figuren 7 bis 9 mit geöffnetem Luftleitelement 2 und folglich zur Fahrtwindanströmung freigelegten Einrichtungen 1.

Bei der in den Figuren 7 bis 10 gezeigten Ausführungsform können mehrere verstellbare Luftleitelemente 2 verwendet werden, wenn z. B. einzelne Einrichtungen 1 verschiedenen Fahrzeug-Verbrauchern zugeordnet werden sollen und/oder verschiedene Umwandlungsenergien erzeugen sollen.

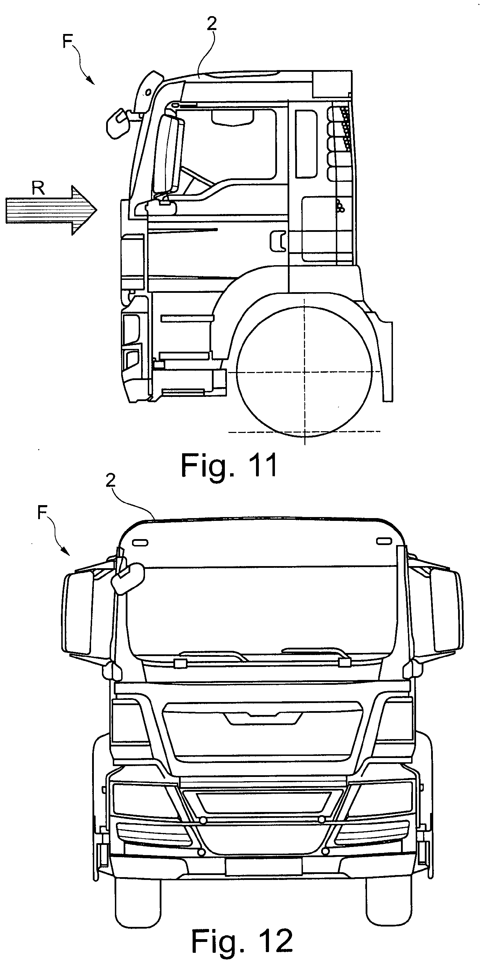

Figur 11 zeigt eine Seitenansicht eines Fahrzeugs F zur Durchführung eines Betriebsverfahrens einer wiederum anderen Ausführungsform der Erfindung mit geschlossenem Luftleitelement 2. Das Fahrzeug F umfasst ein Fahrerhaus, insbesondere ein Nahverkehrsfahrerhaus.

Das Luftleitelement 2 ist als Fahrerhausdachklappe ausgeführt.

Figur 12 zeigt eine Vorderansicht des Fahrzeugs F der Figur 11 mit geschlossenem Luftleitelement 2.

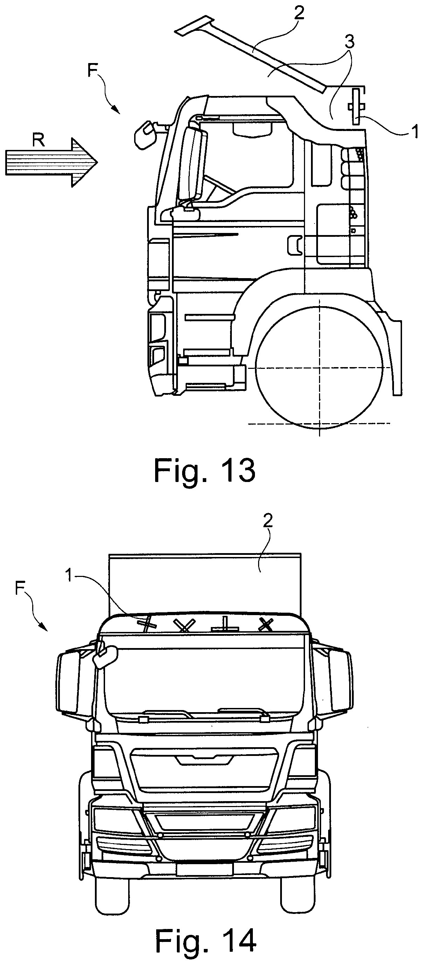

Figur 13 zeigt eine Seitenansicht des Fahrzeugs F der Figuren 11 und 12 mit geöffnetem Luftleitelement 2.

Das Luftleitelement 2 dient wiederum nicht nur dazu, die Einrichtung 1 zur Fahrtwindanströmung freizulegen, sondern ist darüber hinaus so ausgeformt und verstellbar, insbesondere ausschwenkbar, dass es Fahrtwind einfängt, somit als Fahrtwind-Fangmaul fungiert und Fahrtwind zur Einrichtung 1 weiterleitet, obwohl die Einrichtung 1 an einem hinteren Fahrzeugdachabschnitt platziert ist.

Auch in der in Figur 13 gezeigten Ausführungsform fängt das Luftleitelement 2 Fahrtwind ein, der auf die Fahrzeugfront trifft und von der Fahrzeugfront nach oben weitergeleitet wird. Der von dem Luftleitelement 2 eingefangene Fahrtwind kann über einen im oder am Fahrzeugdach ausgebildeten Luftleitschacht 3 zur Einrichtung 1 geführt werden.

Aus Figur 13 wird ferner ersichtlich, dass das geöffnete Luftleitelement 2 während eines Bremsvorgangs des Fahrzeugs F die Fahrtwindanströmfläche des Fahrzeugs F gegenüber einem Fahrbetrieb des Fahrzeugs F ohne Bremsvorgang und somit mit geschlossenem Luftleitelement 2 erhöht.

Figur 14 zeigt eine Vorderansicht des Fahrzeugs F der Figuren 11 bis 13 mit geöffnetem Luftleitelement 2. Figur 14 zeigt, dass das Fahrzeug F mehrere Einrichtungen 1 umfasst.

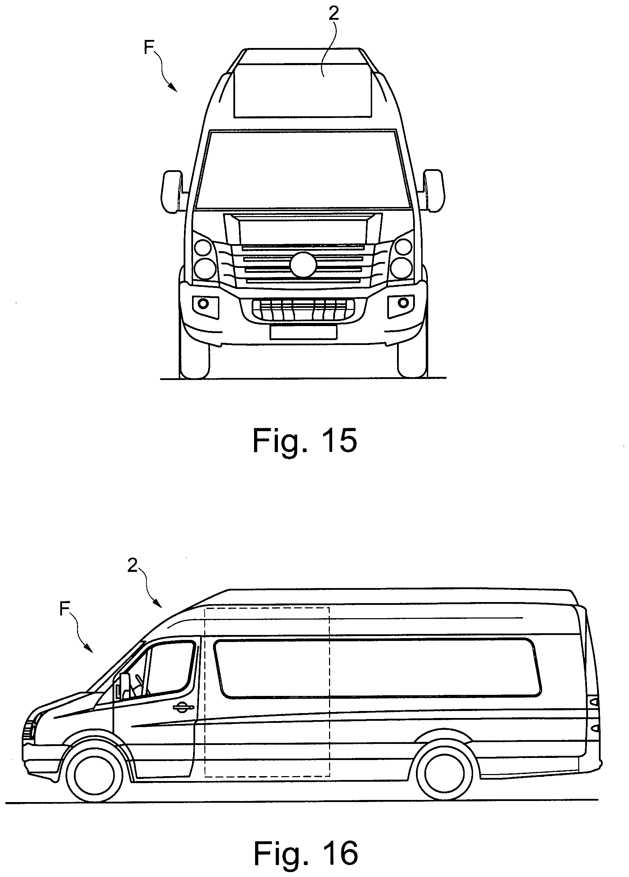

Figur 15 zeigt eine Vorderansicht eines Fahrzeugs F gemäß einer Ausführungsform der Erfindung mit geschlossenem Luftleitelement 2. Das Fahrzeug F ist ein Kraftfahrzeug in Form eines Lieferwagens.

Figur 16 zeigt eine Seitenansicht des Fahrzeugs F der Figur 15 ebenfalls mit geschlossenem Luftleitelement 2.

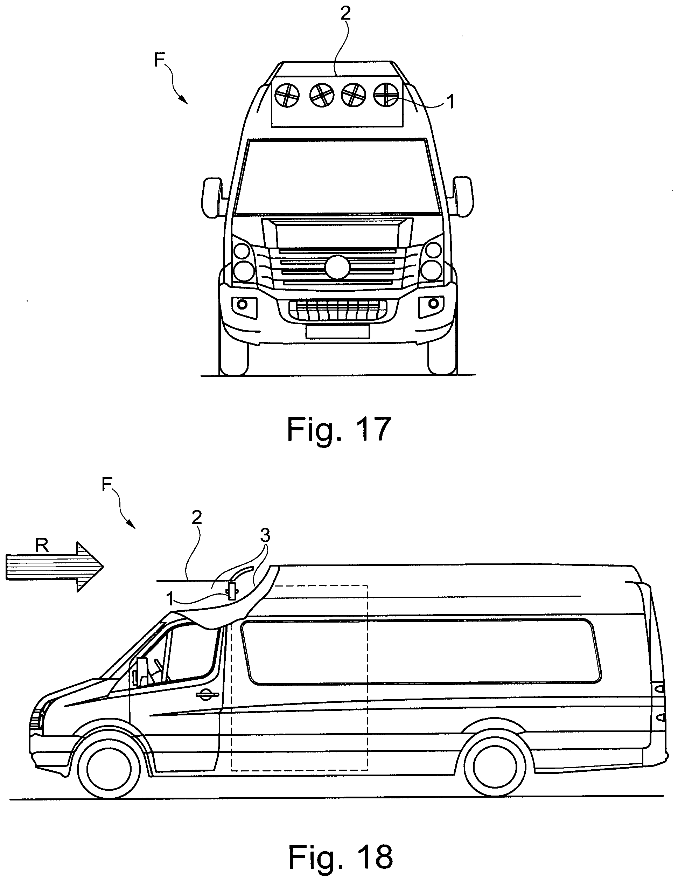

Figur 17 zeigt eine Vorderansicht des Fahrzeugs F der Figuren 15 und 16 mit geöffnetem Luftleitelement 2 und mehreren freigelegten Einrichtungen 1 zur Windenergiegewinnung.

Figur 18 zeigt eine Seitenansicht des Fahrzeugs F der Figuren 15 bis 17 mit geöffnetem Luftleitelement 2 und einem Luftleitschacht 3 auf bzw. in dem Fahrzeugdach.

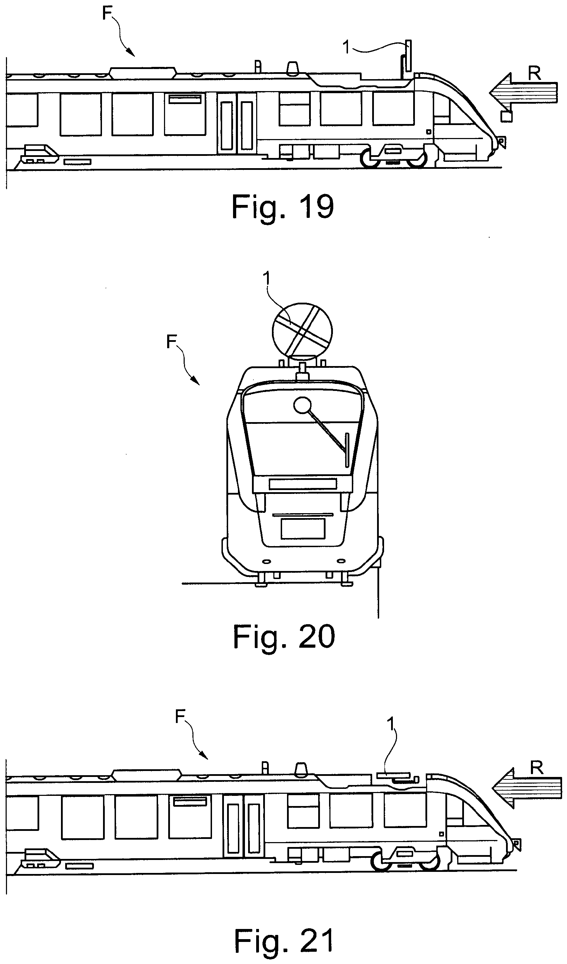

Figur 19 zeigt eine Seitenansicht eines Fahrzeugs F zur Durchführung eines Betriebsverfahrens gemäß einer wiederum anderen Ausführungsform der Erfindung. Das Fahrzeug F ist ein Schienenfahrzeug, insbesondere eine Schienenzugmaschine.

Eine Besonderheit des in Figur 19 gezeigten Fahrzeugs F ist, dass die Einrichtung 1 zur Windenergiegewinnung nicht starr verbaut ist, sondern positionsverstellbar ist, insbesondere in eine im Wesentlichen aufgerichtete Betriebsposition ausschwenkbar ist und in eine im Wesentlichen liegende Ruheposition einschwenkbar ist.

So kann die Einrichtung 1 während eines Bremsvorgangs des Fahrzeugs F in die Betriebsposition zur Windenergiegewinnung und im Fahrbetrieb des Fahrzeugs F ohne Bremsvorgang in die Ruheposition, in der keine Windenergiegewinnung erfolgt, gebracht werden.

Die Einrichtung 1 kann zugleich die Funktion eines Lüfterrads für eine Aggregatskühlung übernehmen. Die Einrichtung 1 kann somit eine Doppelfunktion übernehmen.

Figur 20 zeigt eine Vorderansicht des Fahrzeugs F der Figur 19 mit aufgestellter Einrichtung 1 zur Windenergiegewinnung.

Figur 21 zeigt eine Seitenansicht des Fahrzeugs F der Figuren 19 und 20 mit eingeschwenkter Einrichtung 1. Die Einrichtung 1 ist in der Ruheposition und somit in das Fahrzeugdach integriert, so dass sie zu keiner oder nur zu einer äußerst geringen Luftwiderstandserhöhung führt.

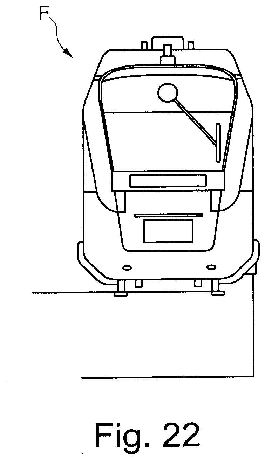

Figur 22 zeigt eine Vorderansicht des Fahrzeugs F der Figuren 19 bis 21 mit eingeschwenkter Einrichtung 1, die in das Fahrzeugdach integriert ist und somit bei einer Frontalansicht nicht zu sehen ist und somit zu keiner oder nur einer äußerst geringfügigen Luftwiderstandserhöhung führt.

Die Erfindung ist nicht auf die oben beschriebenen bevorzugten Ausführungsformen beschränkt. Vielmehr ist eine Vielzahl von Varianten und Abwandlungen möglich, die ebenfalls in den Schutzbereich fallen, der durch die Ansprüche definiert ist.

### Bezugszeichenliste

- 1: Einrichtung zur Windenergiegewinnung
- 2: Luftleitelement
- 3: Fahrzeug-Luftleitschacht, vorzugsweise am Fahrzeugdach oder darin integriert
- L: Fahrzeugkühler
- R: Fahrtwind bzw. Fahrtwindrichtung
- S: Dachspoiler-Seitenelement
- F: Fahrzeug

## Patentansprüche

1. Betriebsverfahren für ein Fahrzeug (F), mit zumindest einer Einrichtung (1) zur Windenergiegewinnung, insbesondere zumindest einem Windrad und/oder zumindest einer Windturbine, wobei die Windenergiegewinnung mittels Fahrtwind während eines Bremsvorgangs des Fahrzeugs (F) erfolgt, wobei das Fahrzeug (F) zumindest ein öffen- und schließbares Luftleitelement (2) für die Einrichtung (1) aufweist und die Einrichtung (1) und/oder das Luftleitelement (2) auf dem Fahrzeugdach angeordnet oder darin integriert ist,
**dadurch gekennzeichnet, dass**
zunächst das Luftleitelement (2) in den Öffnungszustand gebracht wird und die Windenergiegewinnung mittels Fahrtwind erfolgt, was zu einem Bremsvorgang des Fahrzeugs (F) führt, und die Fahrzeugbremsanlage erst bei höherer Bremsanforderung des Fahrzeugs (F) aktiviert wird, um eine zusätzliche Bremswirkung zu erreichen, wobei die Fahrzeugbremsanlage aktiviert wird durch eine Fahrzeugsteuereinrichtung in Abhängigkeit einer vordefinierten Geschwindigkeit des Fahrzeugs (F) und/oder in Abhängigkeit eines Abstands eines vorausfahrenden Fahrzeugs.

2. Betriebsverfahren nach Anspruch 1, **dadurch gekennzeichnet, dass** für einen Fahrbetrieb des Fahrzeugs (F) ohne Bremsvorgang die Windenergiegewinnung unterbunden wird.

3. Betriebsverfahren nach Anspruch 1 oder 2, **dadurch gekennzeichnet, dass** die Windenergiegewinnung mittels Fahrtwind während eines Bergabfahrt-Bremsvorgangs des Fahrzeugs (F) und/oder während eines Dauerbremsvorgangs des Fahrzeugs erfolgt.

4. Betriebsverfahren nach einem der Ansprüche 1 bis 3, **dadurch gekennzeichnet, dass** das Luftleitelement (2) im Öffnungszustand die Fahrtwindanströmfläche des Fahrzeugs (F) vergrößert, so dass die Fahrtwindanströmfläche des Fahrzeugs (F) mit dem Luftleitelement (2) im Öffnungszustand größer ist als mit dem Luftleitelement (2) im Schließzustand.

5. Betriebsverfahren nach einem der vorhergehenden Ansprüche, **dadurch gekennzeichnet, dass**
- das Luftleitelement (2) im Fahrbetrieb des Fahrzeugs (F) ohne Bremsvorgang die Einrichtung (1) von Fahrtwind abschirmt und während des Bremsvorgangs des Fahrzeugs (F) zur Fahrtwindanströmung der Einrichtung (1) freilegt, und/oder
- das Luftleitelement (2) verstellbar ist, um für einen Fahrbetrieb des Fahrzeugs (F) ohne Bremsvorgang in einen Schließzustand zur Fahrtwindabschirmung der Einrichtung (1) gebracht zu werden und für den Bremsvorgang des Fahrzeugs (F) in zumindest einen Öffnungszustand zur Fahrtwindanströmung der Einrichtung (1) gebracht zu werden.

6. Betriebsverfahren nach einem der vorhergehenden Ansprüche, **dadurch gekennzeichnet, dass** das Luftleitelement (2) während des Bremsvorgangs des Fahrzeugs (F) Fahrtwind hin zur Einrichtung (1) leitet und/oder das Luftleitelement (2) im Öffnungszustand ein Fahrtwind-Fangmaul zum Einfangen von Fahrtwind bildet.

7. Betriebsverfahren nach einem der vorhergehenden Ansprüche, **dadurch gekennzeichnet, dass** das Luftleitelement (2) entgegen der Fahrtwindrichtung (R) über der Einrichtung (1) nach vorne hinausragt.

8. Betriebsverfahren nach einem der vorhergehenden Ansprüche, dadurch gekennzeich net, dass das Luftleitelement (2) zumindest ein öffen- und schließbares Spoilerelement und/oder Dachelement umfasst.

9. Betriebsverfahren nach einem der vorhergehenden Ansprüche, **dadurch gekennzeichnet, dass** das Luftleitelement (2) zumindest eine verstellbare Klappe, Rollo und/oder Jalousie umfasst, vorzugsweise in der Fahrzeugfront.

10. Betriebsverfahren nach einem der vorhergehenden Ansprüche, **dadurch gekennzeichnet, dass** das Luftleitelement (2) von einem Fahrzeugdachbereich in einen Fahrzeugfrontbereich verläuft.

11. Betriebsverfahren nach einem der vorhergehenden Ansprüche, **dadurch gekennzeichnet, dass** das Luftleitelement (2) mehrere Öffnungszustände aufweist, so dass die Fahrtwindanströmung der Einrichtung (1) zweckmäßig beeinflussbar ist.

12. Betriebsverfahren nach einem der vorhergehenden Ansprüche, **dadurch gekennzeichnet, dass** die Einrichtung (1) starr verbaut ist oder verstellbar ist, um für einen Fahrbetrieb des Fahrzeugs (F) ohne Bremsvorgang in eine Ruheposition gebracht zu werden und für den Bremsvorgang des Fahrzeugs (F) in zumindest eine Betriebsposition zur Windenergiegewinnung gebracht zu werden.

13. Betriebsverfahren nach einem der vorhergehenden Ansprüche, **dadurch gekennzeichnet, dass** gewonnene Windenergie in elektrische Energie, hydraulische Energie, Druckluft-Energie und/oder Gyro-Energie umgewandelt wird.

14. Betriebsverfahren nach einem der vorhergehenden Ansprüche, **dadurch gekennzeichnet, dass** gewonnene Windenergie zur Kühlung einer Fahrzeugkühlung und/oder zur Klimatisierung eines Fahrzeuginnenraums genutzt wird.

15. Betriebsverfahren nach einem der vorhergehenden Ansprüche, **dadurch gekennzeichnet, dass** die Einrichtung (1) und/oder das Luftleitelement (2) angeordnet oder verstellbar ausgebildet ist, so dass die Einrichtung (1) von Fahrtwind direkt anströmbar ist und zusätzlich Fahrtwind auf den Frontbereich des Fahrzeugs (F) über den Frontbereich zur Einrichtung (1) geleitet wird.

16. Betriebsverfahren nach einem der vorhergehenden Ansprüche, **dadurch gekennzeichnet, dass** ein Luftleitschacht (3) auf dem Fahrzeugdach angeordnet oder darin integriert ist, um Fahrtwind zur Einrichtung (1) zu leiten und/oder Fahrtwind aus der Einrichtung (1) weiterzuleiten, und vorzugsweise der Luftleitschacht (3) zumindest abschnittsweise durch das Luftleitelement (2) begrenzt wird.

17. Betriebsverfahren nach Anspruch 16, **dadurch gekennzeichnet, dass** sich der Querschnitt des Luftleitschachts (3), vorzugsweise im Öffnungszustand des Luftleitelements (2), zur Einrichtung (1) hin verjüngt.

18. Betriebsverfahren nach einem der vorhergehenden Ansprüche, **dadurch gekennzeichnet, dass** ein Fahrzeugbauteil mit zumindest einer Luftdurchlassöffnung in Fahrtwindrichtung (R) hinter der Einrichtung (1) angeordnet ist, um die Einrichtung (1) auf der Fahrzeugrückseite zumindest abschnittsweise abzudecken, zugleich aber Fahrtwind aus der Einrichtung (1) hindurchzulassen.

19. Betriebsverfahren nach einem der vorhergehenden Ansprüche, **dadurch gekennzeichnet, dass** das Fahrzeug (F) mehrere Einrichtungen (1) zur Windenergiegewinnung aufweist und den einzelnen Einrichtungen (1) verschiedene Fahrzeug-Verbraucher und/oder verschiedene Umwandlungsenergien zugeordnet sind sowie den einzelnen Einrichtungen (1) unabhängig voneinander betreibbare Luftleitelemente (2) zugeordnet sind.

20. Betriebsverfahren nach einem der vorhergehenden Ansprüche, **dadurch gekennzeichnet, dass** die Windenergiegewinnung mittels Fahrtwind während eines durch eine Fahrzeugbremsanlage ausgeführten Bremsvorgangs des Fahrzeugs (F) erfolgt.

21. Betriebsverfahren nach einem der vorhergehenden Ansprüche, **dadurch gekennzeichnet, dass** der Bremsvorgang zu einer Geschwindigkeitsreduzierung des Fahrzeugs (F) führt oder dazu, dass das Fahrzeug (F) mit im Wesentlichen konstanter Geschwindigkeit eine Bergabfahrt durchführt.

22. Betriebsverfahren nach einem der vorhergehenden Ansprüche, **dadurch gekennzeichnet, dass** die Fahrzeugbremsanlage ergänzend aktiviert wird durch zumindest eines von folgenden:
- eine Bremspedalbetätigung,
- die Fahrzeugsteuereinrichtung in Abhängigkeit einer erfassten Notbremssituation.

23. Fahrzeug (F), mit zumindest einer Einrichtung (1) zur Windenergiegewinnung, insbesondere zumindest einem Windrad und/oder zumindest einer Windturbine, und eingerichtet, um das Betriebsverfahren nach einem der vorhergehenden Ansprüche auszuführen.

## Claims

1. An operating method for a vehicle (F) having at least one device (1) for harvesting wind energy, in particular at least one wind wheel and/or at least one wind turbine, wherein the wind energy is harvested by means of headwind during a braking operation of the vehicle (F), wherein the vehicle (F) has at least one openable and closable air-guiding element (2) for the device (1) and the device (1) and/or the air-guiding element (2) is arranged on or integrated in the vehicle roof, **characterized in that**
first of all the air-guiding element (2) is moved into the open state and the wind energy is harvested by means of headwind, leading to a braking operation of the vehicle (F), and the vehicle brake system is activated only in the event of a relatively high braking requirement of the vehicle (F), in order to achieve an additional braking action, wherein the vehicle brake system is activated by a vehicle control device as a function of a predefined speed of the vehicle (F) and/or as a function of a distance from a vehicle travelling in front.

2. The operating method according to Claim 1, **characterized in that**, in order for the vehicle (F) to be driven without a braking operation, the wind energy harvesting is suppressed.

3. The operating method according to Claim 1 or 2, **characterized in that** the wind energy is harvested by means of headwind during a downhill braking operation of the vehicle (F) and/or during a continuous braking operation of the vehicle.

4. The operating method according to one of Claims 1 to 3, **characterized in that**, in the open state, the air-guiding element (2) increases the headwind impingement area of the vehicle (F), such that the headwind impingement area of the vehicle (F) is larger with the air-guiding element (2) in the open state than with the air-guiding element (2) in the closed state.

5. The operating method according to one of the preceding claims, **characterized in that**
- the air-guiding element (2) shields the device (1) from headwind when the vehicle (F) is being driven without a braking operation, and exposes the device (1) to headwind impingement during the braking operation of the vehicle (F), and/or
- the air-guiding element (2) is adjustable, in order to be moved into a closed state for headwind shielding of the device (1) for when the vehicle (F) is being driven without a braking operation and to be moved into at least one open state for headwind impingement of the device (1) for the braking operation of the vehicle (F).

6. The operating method according to one of the preceding claims, **characterized in that** the air-guiding element (2) guides headwind towards the device (1) during the braking operation of the vehicle (F) and/or the air-guiding element (2) forms a headwind collector for capturing headwind in the open state.

7. The operating method according to one of the preceding claims, **characterized in that** the air-guiding element (2) projects forward beyond the device (1) counter to the headwind direction (R).

8. The operating method according to one of the preceding claims, **characterized in that** the air-guiding element (2) comprises at least one openable and closable spoiler element and/or roof element.

9. The operating method according to one of the preceding claims, **characterized in that** the air-guiding element (2) comprises at least one adjustable flap, roller blind and/or shutter, preferably in the vehicle front.

10. The operating method according to one of the preceding claims, **characterized in that** the air-guiding element (2) extends from a vehicle roof region into a vehicle front region.

11. The operating method according to one of the preceding claims, **characterized in that** the air-guiding element (2) has a plurality of open states, such that the headwind impingement of the device (1) is expediently influenceable.

12. The operating method according to one of the preceding claims, **characterized in that** the device (1) is installed rigidly or is adjustable in order to be moved into a rest position for when the vehicle (F) is being driven without a braking operation and to be moved into at least one operating position for harvesting wind energy for the braking operation of the vehicle (F).

13. The operating method according to one of the preceding claims, **characterized in that** the harvested wind energy is converted into electrical energy, hydraulic energy, compressed-air energy and/or gyroscopic energy.

14. The operating method according to one of the preceding claims, **characterized in that** the harvested wind energy is used for the cooling of a vehicle cooling system and/or for the air-conditioning of a vehicle interior.

15. The operating method according to one of the preceding claims, **characterized in that** the device (1) and/or the air-guiding element (2) is arranged or configured in an adjustable manner such that the device (1) is able to be impinged upon directly by headwind and additionally headwind onto the front region of the vehicle (F) is guided to the device (1) via the front region.

16. The operating method according to one of the preceding claims, **characterized in that** an air-guiding shaft (3) is arranged on or integrated in the vehicle roof, in order to guide headwind to the device (1) and/or to pass headwind out of the device (1), and preferably the air-guiding shaft (3) is delimited at least partially by the air-guiding element (2).

17. The operating method according to Claim 16, **characterized in that** the cross section of the air-guiding shaft (3), preferably in the open state of the air-guiding element (2), narrows towards the device (1).

18. The operating method according to one of the preceding claims, **characterized in that** a vehicle component having at least one air passage opening is arranged after the device (1) in the headwind direction (R), in order to at least partially cover the device (1) on the vehicle rear side, but at the same time to allow headwind to pass through out of the device (1).

19. The operating method according to one of the preceding claims, **characterized in that** the vehicle (F) has a plurality of devices (1) for harvesting wind energy, and the individual devices (1) are assigned different vehicle consumers and/or different conversion energies, and the individual devices (1) are assigned operable air-guiding elements (2) independently of one another.

20. The operating method according to one of the preceding claims, **characterized in that** the wind energy is harvested by means of headwind during a braking operation of the vehicle (F) that is executed by a vehicle brake system.

21. The operating method according to one of the preceding claims, **characterized in that** the braking operation results in a reduction in speed of the vehicle (F) or results in the vehicle (F) travelling downhill at a substantially constant speed.

22. The operating method according to one of the preceding claims, **characterized in that** the vehicle brake system is additionally activated by at least one of the following:
- brake pedal activation,
- the vehicle control device depending on a sensed emergency braking situation.

23. A vehicle (F) having at least one device (1) for harvesting wind energy, in particular at least one wind wheel and/or at least one wind turbine, and set up to carry out the operating method according to one of the preceding claims.

## Revendications

1. Procédé de fonctionnement pour un véhicule (F), avec au moins un dispositif (1) dans lequel l'extraction d'énergie éolienne se produit au moyen du vent de roulage pendant une opération de freinage du véhicule (F), dans lequel le véhicule (F) présente un élément de guidage d'air pouvant être ouvert et fermé (2) pour le dispositif (1) et le dispositif (1) et/ou l'élément de guidage d'air (2) est disposé sur le toit du véhicule ou est intégré dans celui-ci,
**caractérisé en ce que** l'on amène d'abord l'élément de guidage d'air (2) dans la position d'ouverture et l'extraction d'énergie éolienne se produit au moyen du vent de roulage, ce qui conduit à une opération de freinage du véhicule (F), et on n'active le système de freinage du véhicule que pour une plus forte demande de freinage du véhicule (F), afin d'obtenir un effet de freinage supplémentaire, dans lequel le système de freinage du véhicule est activé par un dispositif de commande du véhicule en fonction d'une vitesse prédéfinie du véhicule (F) et/ou en fonction d'une distance d'un véhicule qui précède.

2. Procédé de fonctionnement selon la revendication 1, **caractérisé en ce que** l'on empêche l'extraction d'énergie éolienne pour une marche du véhicule (F) sans opération de freinage.

3. Procédé de fonctionnement selon une revendication 1 ou 2, **caractérisé en ce que** l'on effectue l'extraction d'énergie éolienne au moyen du vent de roulage pendant une opération de freinage en descente du véhicule (F) et/ou pendant une opération de freinage prolongée du véhicule.

4. Procédé de fonctionnement selon l'une quelconque des revendications 1 à 3, **caractérisé en ce que** l'élément de guidage d'air (2) dans l'état ouvert agrandit la surface d'écoulement du vent de roulage du véhicule (F), de telle manière que la surface d'écoulement du vent de roulage du véhicule (F) soit plus grande avec l'élément de guidage d'air (2) dans l'état d'ouverture qu'avec l'élément de guidage d'air (2) dans l'état de fermeture.

5. Procédé de fonctionnement selon l'une quelconque des revendications précédentes, **caractérisé en ce que**
- l'élément de guidage d'air (2) protège le dispositif (1) du vent de roulage pendant la marche du véhicule (F) sans opération de freinage et le libère pendant l'opération de freinage du véhicule (F) pour l'écoulement du vent de roulage dans le dispositif (1), et/ou
- l'élément de guidage d'air (2) est réglable, pour être amené dans un état de fermeture pour protéger le dispositif (1) du vent de roulage lors d'une marche du véhicule (F) sans opération de freinage et pour être amené dans au moins une position d'ouverture pour l'écoulement du vent de roulage dans le dispositif (1) pour l'opération de freinage du véhicule (F).

6. Procédé de fonctionnement selon l'une quelconque des revendications précédentes, **caractérisé en ce que** l'élément de guidage d'air (2) conduit le vent de roulage vers le dispositif (1) pendant l'opération de freinage du véhicule (F) et/ou l'élément de guidage d'air (2) forme dans l'état d'ouverture une bouche de prise de vent de roulage pour capter le vent de roulage.

7. Procédé de fonctionnement selon l'une quelconque des revendications précédentes, **caractérisé en ce que** l'élément de guidage d'air (2) sort vers l'avant au-dessus du dispositif (1) contre la direction du vent de roulage (R).

8. Procédé de fonctionnement selon l'une quelconque des revendications précédentes, **caractérisé en ce que** l'élément de guidage d'air (2) comprend au moins un élément de déflecteur et/ou un élément de toit pouvant être ouvert et fermé.

9. Procédé de fonctionnement selon l'une quelconque des revendications précédentes, **caractérisé en ce que** l'élément de guidage d'air (2) comprend au moins un clapet, un store et/ou une jalousie réglable, de préférence dans l'avant du véhicule.

10. Procédé de fonctionnement selon l'une quelconque des revendications précédentes, **caractérisé en ce que** l'élément de guidage d'air (2) s'étend depuis une région de toit du véhicule jusque dans une région avant du véhicule.

11. Procédé de fonctionnement selon l'une quelconque des revendications précédentes, **caractérisé en ce que** l'élément de guidage d'air (2) présente plusieurs états d'ouverture, de telle manière que l'écoulement du vent de roulage dans le dispositif (1) puisse être influencé de façon appropriée.

12. Procédé de fonctionnement selon l'une quelconque des revendications précédentes, **caractérisé en ce que** le dispositif (1) est installé de façon rigide ou est réglable, afin d'être amené dans une position de repos pour une marche du véhicule (F) sans opération de freinage et pour être amené dans au moins une position de fonctionnement pour l'extraction d'énergie éolienne pour l'opération de freinage du véhicule (F).

13. Procédé de fonctionnement selon l'une quelconque des revendications précédentes, **caractérisé en ce que** l'on convertit de l'énergie éolienne extraite en énergie électrique, en énergie hydraulique, en énergie d'air comprimé et/ou en gyro-énergie.

14. Procédé de fonctionnement selon l'une quelconque des revendications précédentes, **caractérisé en ce que** l'on utilise de l'énergie éolienne extraite pour le refroidissement d'un système de refroidissement du véhicule et/ou pour la climatisation d'un habitacle du véhicule.

15. Procédé de fonctionnement selon l'une quelconque des revendications précédentes, **caractérisé en ce que** le dispositif (1) et/ou l'élément de guidage d'air (2) est disposé ou est réglable, de telle manière que le dispositif (1) puisse être abordé directement par le vent de roulage et que du vent de roulage arrivant sur la région frontale du véhicule (F) soit en outre conduit par la région frontale vers le dispositif (1).

16. Procédé de fonctionnement selon l'une quelconque des revendications précédentes, **caractérisé en ce qu'**un puits de guidage d'air (3) est disposé sur le toit de véhicule ou est intégré dans celui-ci, afin de guider du vent de roulage vers le dispositif (1) et/ou de retransmettre du vent de roulage hors du dispositif (1), et le puits de guidage d'air (3) est limité au moins localement par l'élément de guidage d'air (2).

17. Procédé de fonctionnement selon la revendication 16, **caractérisé en ce que** la section transversale du puits de guidage d'air (3) diminue vers le dispositif (1), de préférence dans l'état d'ouverture de l'élément de guidage d'air (2).

18. Procédé de fonctionnement selon l'une quelconque des revendications précédentes, **caractérisé en ce qu'**un composant du véhicule avec au moins une ouverture de passage d'air est disposé derrière le dispositif (1) dans la direction du vent de roulage (R), afin de recouvrir le dispositif (1) au moins en partie sur le côté arrière du véhicule, mais en même temps pour laisser passer le vent de roulage qui quitte le dispositif (1).

19. Procédé de fonctionnement selon l'une quelconque des revendications précédentes, **caractérisé en ce que** le véhicule (F) présente plusieurs dispositifs (1) pour l'extraction d'énergie éolienne et différents consommateurs du véhicule et/ou plusieurs énergies de conversion sont associés aux dispositifs individuels (1) et des éléments de guidage d'air (2) pouvant fonctionner indépendamment l'un de l'autre sont associés aux dispositifs individuels (1).

20. Procédé de fonctionnement selon l'une quelconque des revendications précédentes, **caractérisé en ce que** l'on opère l'extraction d'énergie éolienne au moyen de vent de roulage pendant une opération de freinage du véhicule (F) effectuée par un système de freinage du véhicule.

21. Procédé de fonctionnement selon l'une quelconque des revendications précédentes, **caractérisé en ce que** l'opération de freinage conduit à une diminution de la vitesse du véhicule (F) ou à ce que le véhicule (F) effectue une descente à une vitesse essentiellement constante.

22. Procédé de fonctionnement selon l'une quelconque des revendications précédentes, **caractérisé en ce que** le système de freinage du véhicule est activé en complément par au moins une des actions suivantes:
- un actionnement de la pédale de frein,
- une action du dispositif de commande du véhicule en fonction d'une situation de freinage d'urgence détectée.

23. Véhicule (F), avec au moins un dispositif (1) d'extraction d'énergie éolienne, en particulier au moins une roue éolienne et/ou au moins une turbine éolienne, et conçu pour exécuter le procédé de fonctionnement selon l'une quelconque des revendications précédentes.
